# EUROPEAN PATENT SPECIFICATION

(11) **EP 2 498 966 B1**
(45) Date of publication and mention of the grant of the patent: **09.07.2014**
(21) Application number: 10787899.3
(22) Date of filing: 04.11.2010
(51) Int. Cl.: B29C 35/02, B29D 30/06

(54) **A METHOD OF CONTROLLING FLAW FORMATION IN A SEALING LAYER OF A TYRE DURING A PROCESS FOR PRODUCING SELF- SEALING TYRES FOR VEHICLE WHEELS AND PROCESS FOR PRODUCING SELF-SEALING TYRES FOR VEHICLE WHEELS**
VERFAHREN ZUR KONTROLLE DER BILDUNG VON FEHLSTELLEN BEI DER VERSIEGELUNGSSCHICHT EINES REIFENS WÄHREND EINES VERFAHRENS ZUR HERSTELLUNG VON SELBSTVERSCHLIESSENDEN REIFEN FÜR FAHRZEUGRÄDER UND VERFAHREN ZUR HERSTELLUNG VON SELBSTVERSCHLIESSENDEN REIFEN FÜR FAHRZEUGRÄDER
PROCÉDÉ DE COMMANDE DE FORMATION DE FENTE DANS UNE COUCHE D'ÉTANCHÉITÉ D'UN PNEU DURANT UN PROCESSUS DE FABRICATION DE PNEUS AUTO-VULCANISANTS POUR ROUES DE VÉHICULE ET PROCESSUS DE FABRICATION DE PNEUS AUTO- VULCANISANTS POUR ROUES DE VÉHICULE

(30) Priority: 11.11.2009 IT MI20091967; 23.11.2009 US 272953 P
(43) Date of publication of application: 19.09.2012
(73) Proprietor: Pirelli Tyre S.p.A., 20126 Milano (IT)
(72) Inventor: BOIOCCHI, Maurizio, I-20126 Milano (IT); MANCINI, Gianni, I-20126 Milano (IT); PUPPI, Cristiano, I-20126 Milano (IT)
(74) Representative: Tansini, Elio Fabrizio
(86) International application number: PCT/IB2010/054993
(87) International publication number: WO 2011/058480

(56) References cited:
- EP-A2- 0 913 249
- EP-A2- 1 207 037
- US-A- 2 766 006
- US-A- 3 107 565
- US-A- 3 120 571
- US-A- 3 233 020
- US-A- 3 632 701

## Description

The present invention relates to a method of controlling flaw formation in a sealing layer of a tyre during a process for producing self-sealing tyres for vehicle wheels and to a process for producing self-sealing tyres for vehicle wheels.

A tyre for vehicle wheels generally comprises a carcass structure associated with a belt structure. A tread band is applied at a radially external position to the belt structure. The green tyre is built through assembly of respective semifinished products of an elastomeric blend. After building of the green tyre, a curing and molding treatment is generally carried out which aims at determining structural stabilization of the tyre through cross-linking of the elastomeric blends as well as impressing the tread band with a desired tread pattern.

Self-sealing tyres are known which are able to delay or prevent the escape of air and the consequent tyre deflation due to a puncture caused by a pointed object (a nail, for example). In order to obtain this result, a self-sealing tyre comprises at least one layer of sealing polymeric material that can adhere to the object inserted therein and can further flow into the hole when this object is removed, thereby sealing the hole itself and preventing the escape of air from the tyre. This material inside the finished (cured and molded) tyre must be deformable and sticky.

Document US 4,664,168 discloses a self-sealing tyre having an inner surface provided with a sealing layer and a plurality of end strips that partly overlap the sealing layer to keep the layer itself in place during building and use of the tyre. The layer of sealing material is integrated into the tyre structure before the tyre curing and molding steps. The sealing layer is covered with a permeable thin layer or is left at least partly exposed so as to enable the residual air or vapour contained in the sealing material to come out. If this does not happen, during the curing and molding procedures bubbles are formed that will cause such delaminations that the building and functional features of the tyre will be adversely affected.

Document WO 2009/006915 in the name of the same Applicant, discloses a self-sealing tyre comprising a layer of sealing material applied at a radially internal position relative to the carcass plies, in which the sealing material comprises at least one butyl elastomer material, at least one elastomer copolymer and at least one adhesion-promoting agent or tackifier.

Document 08WO-EP056671 in the name of the same Applicant discloses a self-sealing tyre comprising a layer of a sealing composition applied at a radially internal position relative to said at least one carcass ply, in which the sealing material comprises: 55 to 95 phr of at least one natural or synthetic elastomer; 5 to 45 phr of a pre-crosslinked elastomer; 5 to 50 phr of an adhesion-promoting agent; 1 to 40 phr of a reinforcing additive. Document WO 03/028986 in the name of the same Applicant describes a self-sealing tyre comprising a layer of sealing material having particular values of the dynamic modulus of elasticity.

As known from document EP 1 769 941, tyres must be cured under pressure beyond the "blow point" which is the curing limit of the elastomer blends beyond which no more bubbles are formed. Bubbles are formed in the elastomer blend as a result of the formation and expansion of gasses entrapped inside the blend itself during curing. In a typical curing and molding process under pressure, the pressure external to the tyre and generated in the mold prevents the gases from expanding. At a certain point during curing, when the blow point has been reached, the modulus of the elastomer blend determined by the density of the lattice of bonds between the macromolecules, prevents expansion of the gases also without the pressure generated in the mold. At this point the tyre can be removed from the mold and curing can be completed due to the only action of the temperature. In a tyre the curing time is set in such a manner that the minimum cure exceeds the blow point.

Document US3107565 discloses an apparatus to provide passageways for the escape of gaseous materials from within the carcass of a rubber vehicle tyre. The apparatus comprises tire piercing means movably mounted on the apparatus and means directly communicating the interior of the tyre with the tyre piercing means whereby fluid supplied to inflate said tyre may flow to said tyre piercing means to cause piercing of the tyre. Document US3233020 discloses a method of post-treating a completely vulcanized tyre which includes the steps of: filling the tyre with a pressure medium and heating the tyre in this condition to a temperature within the range of from 80° to 130° while maintaining the thus heated tyre at the respective temperature within said range over a period of from three minutes to three hours depending on the tyre size and type and the treating temperature.

Document US3120571 discloses a method of manufacturing a pneumatic tyre wherein the tyre is removed from the mold, mounted on a split-rim and subjected to cooling under post-inflation conditions. The tyre is circumferentially confined at the tread surface only thereof while the sidewalls are unrestrained during cooling, whereby radial growth, unevenness and out-of-roundness of the tyre are minimized.

Document US3632701 discloses a method of improving the riding characteristics of a pneumatic tyre wherein the tyre removed from the press is inflated and held in an inflated condition while cooling. The method comprising: measuring the forces exerted by the inflated rotating tyre under load against a surface, locating the area of the tyre at which the greatest variation in force is generated and heat treating the tyre in a vertical position with said area at the top of the tyre.

In the present specification and the appended claims, the cross-linking density starting from which the blend consistency is such that the gases present within the blend cannot expand even in the absence of the pressure generated in the vulcanization mold is referred to as "blow point".

The Applicant has noticed that in self-sealing tyres like those described above, in which the sealing layer is integrated into the tyre structure and assembled in the green tyre before curing and is therefore inserted in the mold for curing, the sealing material might not reach the blow point because it is necessary for it to maintain the features that make it such (deformable and sticky and therefore sealing).

The Applicant has further noticed that at the moment the tyre is removed from the mold, the gases produced inside the tyre that are to a higher pressure than the atmospheric one, tend to reach an equilibrium with the external pressure. Therefore the gases are diffused inside the tyre, without expanding, as long as they are in the cured blend with a lattice density higher than the blow point. The lattice density is such that the blend, even if submitted to an internal pressure higher than the external one, does not become deformed and does not allow the formation of bubbles.

On the contrary, gases expand when they reach the layer of sealing material because said layer has a lower lattice density than the blow point. Within the layer of sealing material these gases deform the layer itself giving rise to well visible bubbles in particular on the radially internal surface of the tyre, in the region of the liner.

The Applicant has further ascertained that covering the sealing layer with a thin permeable layer or leaving it at least partly exposed, as described in the above mentioned document US 4,664,168, this does not enable the gases contained in the sealing material to escape, because these gases reach an equilibrium with the atmospheric pressure and expanding therein.

The Applicant has found that by exerting a working pressure on the radially internal surface of a cured tyre comprising a sealing layer and bringing a radially external surface of the tyre itself into communication with the external environment, at the end of the curing and molding step, over a time sufficient to enable partial condensing and/or partial escape of said gases from the sealing layer, it is possible to avoid the formation of bubbles in this sealing layer.

The working pressure is applied by inflating the tyre and forcing the inner gases to escape through the radially external surface thereof. This working pressure is maintained for a time sufficient to enable said gases to condense and/or diffuse within the sealing layer and through permeable portions of the cross-linked elastomer material of the other tyre components, until reaching the external environment.

More specifically, in a first aspect, the present invention relates to a method of controlling flaw formation in a sealing layer of a tyre during a process for producing self-sealing tyres for vehicle wheels, comprising:
i) submitting a green tyre comprising at least one carcass ply, a belt structure applied at a radially external position to said carcass ply, a tread band applied at a radially external position to said belt structure and at least one layer of sealing material applied at a radially internal position to said at least one carcass ply, to curing and molding, heating it over a predetermined period of time in a molding cavity of a vulcanization mold for substantially curing at least said tread band, belt structure and carcass ply;
ii) removing the substantially cured tyre from said vulcanization mold;
iii) arranging said tyre so that a radially external surface thereof, corresponding at least to the tread band, is in fluid communication with the external environment;
iv) applying a working pressure on a radially internal surface of the tyre, which pressure is greater than the pressure of the external environment to such an extent that it counteracts diffusion of gases generated during curing, inside the sealing layer, until a substantially full evacuation of said gases is obtained through at least said radially external surface of the tyre.

In a second aspect, the present invention relates to a process for producing self-sealing tyres for vehicle wheels, comprising:
a) building a green tyre comprising at least one carcass ply, a belt structure applied at a radially external position to said carcass ply, at least one tread band applied at a radially external position to said belt structure, at least one layer of sealing material applied at a radially internal position to said at least one carcass ply;
b) submitting the green tyre to a curing and molding step, heating it over a predetermined period of time, in a molding cavity of a vulcanization mold for substantially curing at least said tread band, belt structure and carcass ply;
c) removing the substantially cured tyre from said vulcanization mold;
d) disposing said tyre so that a radially external surface thereof corresponding at least to the tread band is in fluid communication with the external environment;
e) applying a working pressure onto a radially internal surface of the tyre, which pressure is greater than the pressure of the external environment to such an extent as to counteract diffusion of gases generated during curing, inside the sealing layer, until a substantially complete evacuation of said gases is obtained through at least said radially external surface of the tyre.

To the aims of the present invention, by substantial curing of a tyre or tyre components (tread band and/or carcass) it is intended reaching of the so-called "blow point".

The present invention, in at least one of the above aspects, can have one or more of the preferred features hereinafter described.

Preferably the tyre comprises a gas-tight layer or liner applied at a radially internal position to said at least one layer of sealing material.

Preferably, the difference between the working pressure and the pressure of the external environment is comprised from about 0.3 bar to about 4 bars, more preferably from about 1 bar to about 3 bars.

Preferably, application of said working pressure is carried out for a work time comprised from about 5 min to about 60 min, more preferably from about 10 min to about 40 min.

The exact pressure and time values can be calculated based on the specific situations.

In a preferred variant for accomplishment of the process, during application of said working pressure the tyre is heated.

Preferably, during application of said working pressure the tyre is maintained to a working temperature comprised from about 70°C to about 120°C, more preferably comprised from about 80°C to about 100°C.

The kinetic process of gas diffusion within the tyre material has a speed proportional to temperature. Therefore a temperature increase allows the duration of the period during which application of said working pressure occurs - i.e. the time required to enable the fluids to substantially leave the sealing-material layer - to be reduced.

Preferably, application of said working pressure is carried out in an auxiliary inflation device.

Adoption of the auxiliary inflation device allows the vulcanization mold to be cleared making it available for carrying out curing of another green tyre while the already cured tyres are submitted to application of the so-called working pressure in the respective auxiliary inflation devices. As auxiliary inflation devices the "Post Cure Inflators" (PCI's) can be used which are already known by themselves for other functions (as described in the prior document US 6,322,342, for example). The "PCI's" are known by themselves for maintaining the dimension stability of the coverings formed with carcasses comprising cords, of nylon for example (as in document US 3,002,228) that, during cooling, suffer from a certain shrinkage connected with temperature and can modify their arrangement in the structure or make said structure collapse. Preferably, the tyre is transferred from the vulcanization mold to the auxiliary inflation device during a transferring time of less than 3 min.

More preferably, the tyre is transferred from the vulcanization mold to the auxiliary inflation device during a transferring time of about 1 min.

Preferably, during application of said working pressure (P₂) the auxiliary inflation device is placed in a furnace.

The transfer time from the vulcanization mold to the auxiliary inflation device must be shorter than the gas diffusion time inside the sealing layer to avoid the consequent diffusion of said gases during transfer.

According to an embodiment, building comprises: applying at least one airtight layer at a radially internal position to the sealing material.

The structure of a tyre made in this manner is the most critical one because if the working pressure in accordance with the process of the invention is not applied, the airtight layer or liner prevents the gases diffused in the adjacent sealing layer from coming out of the radially internal surface of the tyre and brings to formation of bubbles appearing in the form of protrusions on the liner.

According to an alternative embodiment, the layer of sealing material is the radially innermost layer of the tyre.

This configuration can be for instance obtained by removal of an inner anti-sticky layer previously used for avoiding adhesion to the forming drum and/or the vulcanization chamber.

In this situation too, if the working pressure in accordance with the process of the invention is not applied, the gases could not succeed in fully escaping from the radially internal surface of the tyre without generating bubbles because, as already described above, these gases reach the equilibrium with the atmospheric pressure expanding therein.

Preferably, said predetermined temperature is comprised from about 120°C to about 200°C.

Preferably, the predetermined time (t₁) is comprised from about 15 min to about 30 min.

Preferably, during molding the radially internal surface of the tyre is submitted to a predetermined pressure comprised from about 10 bars to about 30 bars.

Preferably, said at least one carcass ply comprises a plurality of textile reinforcing cords disposed parallel to each other and at least partly covered with a layer of elastomer material; wherein said textile reinforcing cords have a free percent heat-shrinkage, measured in hot air at 177°C, not exceeding 4%, preferably not exceeding 3%, more preferably not exceeding 2.5%.

According to an alternative embodiment, said at least one carcass ply comprises a plurality of metallic reinforcing cords disposed parallel to each other and at least partly covered with a layer of elastomeric material.

Both the above mentioned embodiments of the carcass ply are submitted to minimum shrinkages and therefore would not need use of the "Post Cure Inflator" (PCI) in order to ensure the dimension stability of the tyre.

Further features and advantages will become more apparent from the detailed description of a preferred, but not exclusive, embodiment of a process for producing self-sealing tyres for vehicle wheels in accordance with the present invention.

This description will be set out hereinafter with reference to the accompanying drawings, given by way of non-limiting example, in which:
- Fig. 1 diagrammatically shows a radial half-section of a self-sealing tyre for vehicle wheels;
- Fig. 2 is a radial cross-section of a portion of a vulcanization mold containing the tyre of Fig. 1 during a curing and molding step;

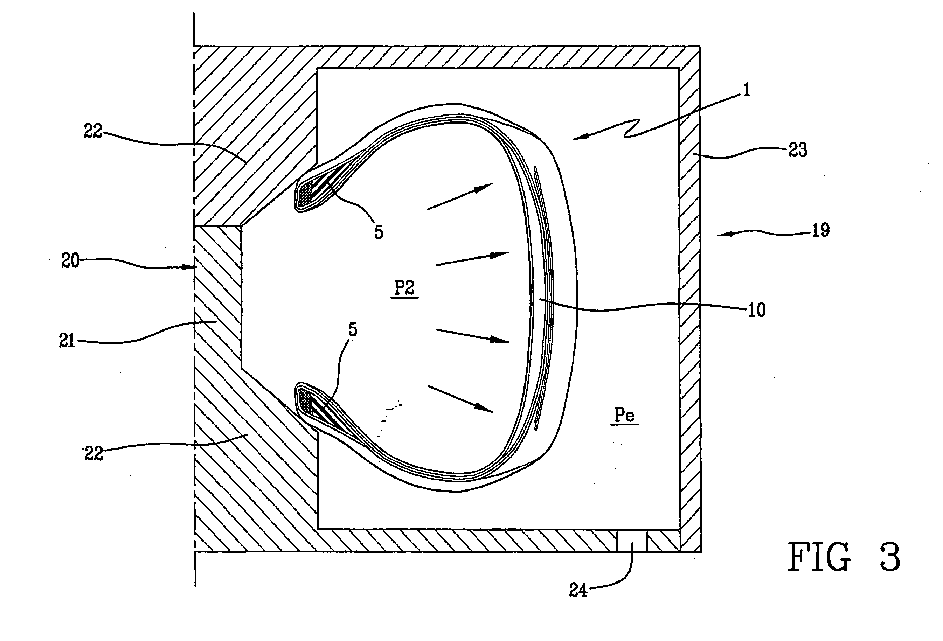

- Fig. 3 is a radial cross-section of the tyre seen in Fig. 1 installed on an auxiliary device during a step of the process according to the invention.

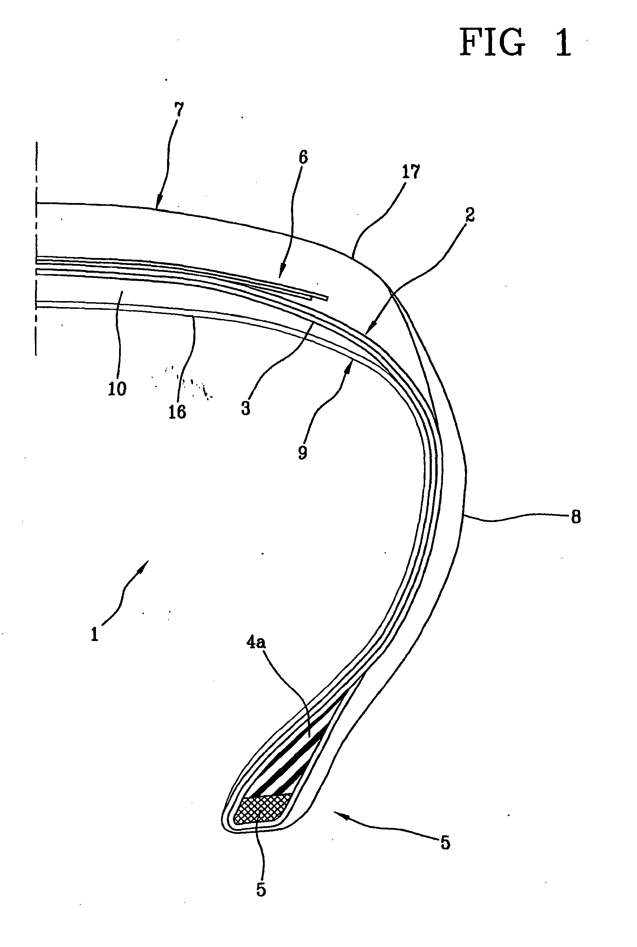

Shown in Fig. 1 and denoted by reference numeral 1 is a self-sealing tyre for vehicle wheels, which tyre generally comprises a carcass structure 2 comprising at least one carcass ply 3 having respectively opposite end flaps in engagement with respective annular anchoring structures 4 possibly associated with elastomer fillers 4a and integrated into the regions 5 generally identified with the name of "beads". The carcass ply 3 comprises a plurality of textile reinforcing cords, made of a substantially non heat-shrinkable fibres (such as fibres derived from cellulose like lyocell or rayon or high-modulus low-shrinkage polyester fibres), or metallic cords disposed parallel to each other and at least partly coated with a layer of elastomer material.

To the aims of the present invention, by substantially non heat-shrinkable fibre it is intended a fibre having a free percent heat-shrinkage (in a dry state at 177°C) according to ASTM D2259 - 02(2006)el standard, not exceeding 4%, preferably not exceeding 3%, more preferably not exceeding 2.5%.

Associated with the carcass structure 2 is a belt structure 6 comprising one or more belt layers, disposed in superposed radial relationship with each other and the carcass ply 3 and having typically metallic reinforcing cords.

These reinforcing cords can have a crossed orientation relative to the circumferential extension direction of tyre 1.

Applied at a radially external position to the belt structure 6 is a tread band 7 made of an elastomer blend, like other semi-finished products constituting tyre 1.

In addition, a radially internal surface of tyre 1 is preferably internally coated with a layer of air-tight elastomer material or a so-called liner 9.

In the embodiment shown in Fig. 1, tyre 1 is of the type for motor-vehicles.

Typically in this case the belt structure 6 further comprises at least one radially external layer comprising textile cords disposed at a substantially zero angle relative to the circumferential extension direction of the tyre.

In accordance with alternative embodiments of the present invention, tyre 1 is of the type designed to be used for heavy vehicles. The term "heavy vehicle" is understood as indicating a vehicle belonging to categories M2∼M3, N1∼N3 and O2∼O4 defined in "Consolidated Resolution of the Construction of Vehicles (R.E.3) (1997)", Annex 7, pages 52-59, "Classification and Definition of Power-Driven Vehicles and Trailers", such as lorries, lorries with trailers, tractors, buses, vans and other vehicles of this type. The belt structure in a tyre for heavy vehicles (not shown) typically comprises a belt layer usually known with the name of "gravel-guard belt" which is the radially outermost layer of the belt structure and acts as a protective layer against penetration of stones and/or gravel into the innermost layers of the tyre structure. Preferably, the belt structure of a tyre for heavy vehicles further comprises a reinforcing side strip that can be radially superposed on the second belt layer, at an axial end thereof. The side strip incorporates a plurality of reinforcing elements, preferably high-elongation metallic cords. Preferably, in addition, an insert is disposed substantially at the shoulder portion, i.e. the portion where the side end of the tread band joins the sidewall. In particular, the insert has a portion that is substantially interposed in a radial direction between the belt structure and tread band and a portion that is substantially interposed in an axial direction between the carcass and sidewall.

In accordance with further embodiments of the present invention, tyre 1 is intended for motorcycles. The outline of the cross section of the tyre for motorcycles (not shown) has a high camber as it must ensure a sufficient footprint area in all tilting conditions of the motorcycle. The transverse curvature is defined by the value of the ratio between the distance f of the tread centre from the line passing through the laterally opposite ends E of the tread, measured in the equatorial plane of the tyre, and the width C defined by the distance between the laterally opposite ends E of the tread. By tyre with a high transverse curvature it is denoted a tyre the ratio of transverse curvature (f/C) of which is of at least 0.20. Preferably (f/C) is respectively comprised from 0.20 to 0.5 for a rear tyre and 0.35 and 0.6 for a front tyre.

The self-sealing tyre 1 according to the invention further comprises at least one layer of sealing polymer material 10 disposed at a crown region of tyre 1 and at a radially internal position relative to the carcass plies 3. In the embodiment shown, the layer of sealing polymer material 10 is interposed between the radially innermost carcass ply 3 and liner 9. In an alternative embodiment not shown, the layer of sealing material 10 is the radially innermost layer of tyre 1.

The sealing polymer material for instance comprises at least one butyl elastomer, at least one elastomer copolymer and at least one adhesion-promoting agent, as described in document WO 2009/006915 mentioned above, or at least one natural or synthetic elastomer, at least one pre-crosslinked elastomer, at least one adhesion-promoting agent and at least one reinforcing additive, as described in document 08WO-EP056671 mentioned above. This material, when an object penetrates into the tyre and through the layer of sealing polymer material 10, is able to adhere to the object introduced thereinto and can further flow into the hole when such an object is removed, thus sealing the hole and inhibiting the escape of air from the tyre.

Building of the green tyre 1 as above described, inclusive of the layer of sealing polymer material 10, is carried out through assembly of respective semifinished products on a forming support, not shown.

After building of the green tyre, a curing and molding treatment is carried out which aims at determining the structural stabilization of tyre 1 through cross-linking of the elastomer blends and also at impressing the tread band 7 with a desired tread pattern and stamping possible distinctive graphic marks at the sidewalls 8. During curing, a lattice of covalent bonds is developed among the elastomer macromolecules and, depending on the lattice density, flowing thereof is prevented making the material increasingly more insoluble, infusible and elastic.

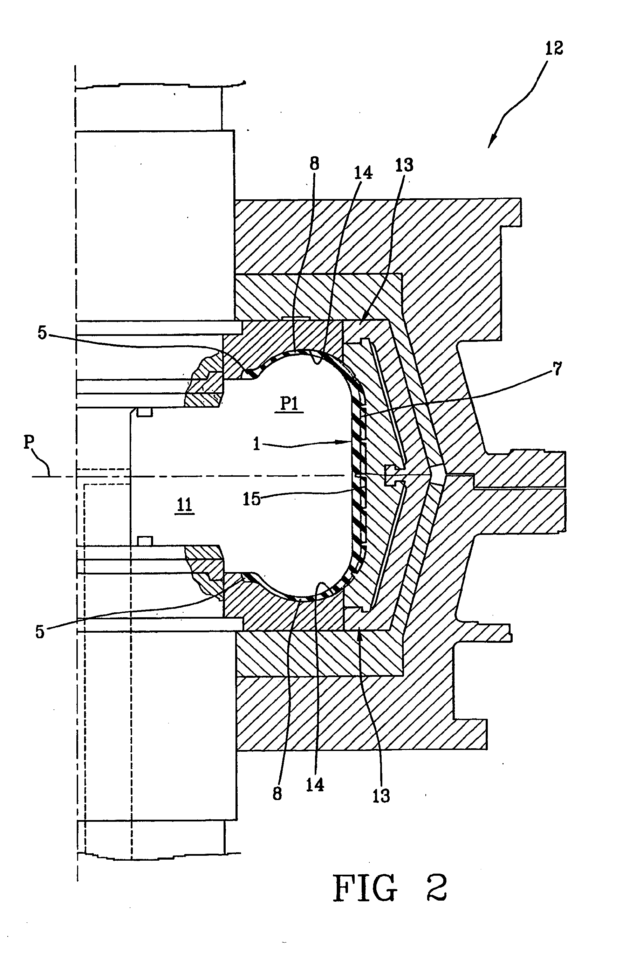

To this aim, the green tyre 1 is introduced into a molding cavity 11 of a vulcanization mold 12. As shown in Fig. 2, the vulcanization mold 12 comprises a pair of axially opposite shells that can be mutually coupled at an equatorial plane "P". Each of the shells 13 has a work surface 14 designed to operate on the beads 5 and sidewalls 8 of the green tyre 1 to be cured. The shells 13 mutually approached in said equatorial plane "P" further define a circumferential surface 15 designed to act against a tread band 7 of tyre 1 to be cured. Shells 13 delimit an inner surface of the molding cavity 11 having a shape conforming to the final conformation to be given to tyre 1.

The green tyre 1, once enclosed in mold 12, is pressed against the work surfaces 14 and the circumferential surface 15, submitting a radially internal surface 16 of tyre 1 to a predetermined pressure "Pᵢ", preferably comprised from about 10 bars to about 30 bars. Due to pressing, suitable protrusions, not shown, provided on shells 13 cause formation of a desired tread pattern on the tread band 7 of tyre 1, as well as possibly a plurality of graphic marks on the sidewalls 8 of said tyre 1.

Subsequently to, or simultaneously with the pressing step, heat is supplied to tyre 2 so as to submit the green tyre 1 to cross-linking. Due to administration of heat, tyre 1 is heated to a predetermined temperature "T₁", preferably comprised from about 120°C to about 200°C, and over a predetermined time "t₁", preferably comprised from about 15 min to about 30 min.

During curing, gases are formed inside the blends of the elastomer components, which gases remain partly entrapped therein.

The predetermined temperature "T₁" and predetermined time "t₁" are of such a nature as to cause reaching of the blow point "BP" in all elastomer components of tyre 1 (carcass plies 3, belt structure 6, tread band 7, sidewalls 8, liner 9, etc.) except in the layer of the sealing polymer material 10.

The curing time "t₁" at reaching of which the vulcanization mold is opened and the tyre is removed, is defined, case by case, as a function of the type of blends used and the tyre sizes. This curing time corresponds to reaching of the blow point "BP" and/or the physico-chemical features (in particular stiffness and modulus) adapted to ensure the desired performance of the product.

Once reached the "BP" in the elastomer components of tyre 1, and the structural stability of same, except in the layer of the sealing polymer material 10, mold 12 is opened and tyre 1 removed. A work pressure "P₂" is applied to the radially internal surface 16 of tyre 1 while a radially external surface 17 of the tyre itself is in fluid communication with the external environment and is therefore to the pressure of the external environment "Pₑ". The work pressure "P₂" is applied until substantial evacuation of the gases is obtained through said radially external surface 17 of tyre 1.

The work pressure "P₂" is greater than pressure "Pₑ" of the external environment and preferably the difference between the work pressure "P₂" and the external environment pressure "Pₑ" is comprised from about 0.3 bar to about 4 bars, more preferably comprised from about 1 bar to about 3 bars. In addition, preferably, this pressure difference is maintained over a work time "t₂" comprised from about 5 min to about 60 min, more preferably comprised from about 10 min to about 40 min.

In accordance with an embodiment of the process, once curing has been completed, tyre 1 removed from the vulcanization mold 12 is transferred and mounted in an auxiliary inflation device 19 (diagrammatically shown in Fig. 4), which can be a "Post Cure Inflator" (PCI). The auxiliary inflation device 19 comprises a support 20 provided with a shaft 21 carrying two flanges 22, each adapted to sealingly engage against an axially external edge of a respective bead 5 of tyre 1. The radially internal surface 16 of the tyre together with support 20 delimit a volume in fluid communication with a source of compressed air, not shown, adapted to apply the work pressure "P₂" to the radially internal surface 16. Preferably, the auxiliary inflation device 19 further comprises a cover 23 to be mounted on support 20 and adapted to enclose tyre 1 in a chamber maintained to the external-environment pressure "Pₑ", because it is in communication with the external environment through an opening 24, for example.

Tyre 1 is transferred from the vulcanization mold 12 to the auxiliary inflation device 19 over a period of time "tₜ" lower than the diffusion time of the gasses inside the sealing layer. Preferably, the transfer time "tₜ" is less than 3 min, more preferably this time "tₜ" is about 1 min.

In addition, preferably, tyre 1 is heated and maintained to a work temperature "T₂" lower than the predetermined curing temperature "T₁" and preferably comprised from about 70°C to about 120°C, more preferably comprised from about 80°C to about 100°C.

Heating of tyre 1 located within the auxiliary inflation device 19 is carried out by suitable heating elements installed on board the auxiliary inflation device 19 itself, or the auxiliary inflation device 19 is placed in a furnace.

### EXAMPLE

Four tyres Pirelli P7 235/45R17 were prepared, said tyres having the sealing layer disposed between a liner and the carcass structure and having the following formulation:

**TABLE 1**

| | |
|---|---|
| IR | 80 |
| SBR 1009 | 20 |
| Peptizer | 0.5 |
| Novares^{®} C30 | 20 |
| Durez^{®} 29095 | 18 |
| Struktol^{®} 40MS | 7 |
| N326 | 12 |

In table 1:
- IR is a cis-1,4-polyisoprene elastomer produced by Nizhnekamskneftechim Export, Russia;
- SBR 1009 is a styrene-butadiene elastomer copolymer cross-linked with divinyl benzene produced by International Specialty Products (ISP);
- Peptizer is PEPTON 66 produced by Anchor Chemical Ltd, UK;
- Novares^{®} C30 is an indene cumarone resin, produced by Rutgers Chemical GmbH;
- Durez^{®} 29095 is an alkyl phenol formaldehyde, produced by Sumitomo Bakelite Europe, Durez Division;
- Struktol^{®} 40 MS is a blend of aromatic aliphatic naphthenic hydrocarbon resins (Struktol Corporation);
- N326 is carbon black.

The tyres further comprised an intermediate layer referred to as underlayer, between the sealing layer and the liner.

The three layers have the following size features:

**TABLE 2**

| Tyre | 1 | 2 | 3 | 4 |
|---|---|---|---|---|
| Sealing layer - thickness (mm) | 4.3 | 4.3 | 4.3 | 4.3 |
| Underlayer - thickness (mm) | 0.6 | 0.6 | 0.6 | 0.6 |
| Liner - thickness (mm) | 0.6 | 0.6 | 0.8 | 0.8 |

Tyres 1 and 2 were submitted to a curing cycle with the following temperature parameters of the mold:

**TABLE 3**

| | |
|---|---|
| Plate temperature: | 174 °C |
| Sector temperature: | 178 °C |

The following table shows the pressure of the fluids present in the vulcanization chamber and the curing steps:

**TABLE 4**

| Time (min) | Fluid | Pressure |
|---|---|---|
| 0 (press closure) | vapour | 6,5 bars (168°C) |
| 4 | nitrogen | 25 bars |
| 19 | fluid evacuation | |
| mold opening and tyre removal | | |

After opening of the mold, tyres 1 and 2 were picked up by conveyor belts and directly sent to finishing. Cooling took place in the department room.

Tyres 3 and 4 were submitted to a curing cycle using the same conditions adopted for tyres 1 and 2. The curing cycle was followed by a treatment in accordance with the method of controlling flaw formation in a sealing layer according to the present invention. The treatment was carried out by introducing tyres 3 and 4 into a Post Cure Inflator (PCI) within a period of 60 seconds from removal from the mold. The tyres mounted on the "PCI" were cooled in the department room.

The treatment in the "PCI" was carried out:
- on tyre 3 for 18 minutes at an inflating pressure of 3 bars;
- on tyre 4 for 27 minutes at an inflating pressure of 3 bars.

The four tyres were inspected. In the crown region, the liner of tyres 1 and 2 showed a considerable number of flaws and bulges due to the presence of bubbles in the sealing layer. Tyres 3 and 4 did not show flaws in the sealing layer and the liner appeared to be uniform.

## Claims

1. A method of controlling flaw formation in a sealing layer of a tyre during a process for producing self-sealing tyres for vehicle wheels, comprising:
- submitting a green tyre (1), comprising at least one carcass ply (3), a belt structure (6) applied at a radially external position to said carcass ply (3), a tread band (7) applied at a radially external position to said belt structure (6) and at least one layer of sealing material (10) applied at a radially internal position to said at least one carcass ply (3), to curing and molding, heating it over a predetermined period of time (t₁) in a molding cavity (11) of a vulcanization mold (12) for substantially curing at least said tread band (7), belt structure (6) and carcass ply (3);
- removing the substantially cured tyre (1) from said vulcanization mold (12);
- arranging said tyre so that a radially external surface (17) thereof, corresponding at least to the tread band (7), is in fluid communication with the external environment;
- applying a working pressure (P₂) on a radially internal surface of the tyre (1), which pressure is greater than the pressure of the external environment (Pₑ) to such an extent that it counteracts diffusion of gases generated during curing, inside the sealing layer (10), until evacuation of said gases is obtained through at least said radially external surface (17) of the tyre (1).

2. A method as claimed in claim 1, wherein the tyre (1) comprises a gas-tight layer or liner (9) applied at a radially internal position to said at least one layer of sealing material (10).

3. A method as claimed in claim 1, wherein the difference between the working pressure (P₂) and the pressure of the external environment (Pₑ) is comprised from 0.3 bar to 4 bars.

4. A method as claimed in claim 1, wherein the difference between the working pressure (P₂) and the pressure of the external environment (Pₑ) is comprised from 1 bar to 3 bars.

5. A method as claimed in claim 1, wherein application of said working pressure (P₂) is carried out for a work time (t₂) comprised from 5 min to 60 min.

6. A method as claimed in claim 1, wherein application of said working pressure (P₂) is carried out for a work time (t₂) comprised from 10 min to 40 min.

7. A method as claimed in claim 1, wherein during application of said working pressure (P₂) the tyre (1) is heated.

8. A method as claimed in claim 1, wherein during application of said working pressure (P₂) the tyre (1) is maintained to a working temperature (T₂) comprised from 70°C to 120°C.

9. A method as claimed in claim 1, wherein during application of said working pressure (P₂) the tyre (1) is maintained to a working temperature (T₂) comprised from 80°C to 100°C.

10. A method as claimed in claim 1, wherein application of said working pressure (P₂) is carried out in an auxiliary inflation device (19).

11. A method as claimed in claim 10, wherein the tyre (1) is transferred from the vulcanization mold (12) to the auxiliary inflation device (19) during a transferring time (tₜ) of less than 3 min.

12. A method as claimed in claim 10, wherein the tyre (1) is transferred from the vulcanization mold (12) to the auxiliary inflation device (19) during a transferring time (tₜ) of 1 min.

13. A method as claimed in claim 10, wherein during application of said working pressure (P₂) the auxiliary inflation device (19) is placed in a furnace.

14. A process for producing self-sealing tyres for vehicle wheels, comprising:
- building a green tyre (1) comprising at least one carcass ply (3), a belt structure (6) applied at a radially external position to said carcass ply (3), at least one tread band (7) applied at a radially external position to said belt structure (6), at least one layer of sealing material (10) applied at a radially internal position to said at least one carcass ply (3);
- submitting the green tyre (1) to a curing and molding step, heating it over a predetermined period of time (t₁), in a molding cavity (11) of a vulcanization mold (12) for substantially curing at least said tread band (7), belt structure (6) and carcass ply (3);
- removing the substantially cured tyre (1) from said vulcanization mold (12);
- disposing said tyre (1) so that a radially external surface (17) thereof corresponding at least to the tread band (7) is in fluid communication with the external environment;
- applying a working pressure (P₂) onto a radially internal surface (16) of the tyre (1), which pressure is greater than the pressure of the external environment (Pₑ) to such an extent as to counteract diffusion of gases generated during curing, inside the sealing layer (10), until a substantially complete evacuation of said gases is obtained through at least said radially external surface (17) of the tyre (1).

15. A process as claimed in claim 14, wherein building comprises: applying at least one airtight layer or liner (9) at a radially internal position to the sealing material (10).

16. A process as claimed in claim 14, wherein the layer of sealing material (10) is the radially innermost layer of the tyre (1).

17. A process as claimed in claim 14, wherein, during the curing and moulding step, the green tyre (1) is heated at a predetermined temperature (T₁) comprised from 120°C to 200°C.

18. A process as claimed in claim 14, wherein the predetermined time (t₁) is comprised from 15 min to 30 min.

19. A process as claimed in claim 14, wherein during molding the radially internal surface (16) of the tyre (1) is submitted to a predetermined pressure (P₁) comprised from 10 bars to 30 bars.

20. A process as claimed in claim 14, wherein said at least one carcass ply (3) comprises a plurality of textile reinforcing cords disposed parallel to each other and at least partly covered with a layer of elastomeric material; wherein said textile reinforcing cords have a free percent heat-shrinkage measured in hot air at 177°C, not exceeding 4%, preferably not exceeding 3%, more preferably not exceeding 2.5%.

21. A process as claimed in claim 14, wherein said at least one carcass ply 3 comprises a plurality of metallic reinforcing cords disposed parallel to each other and at least partly covered with a layer of elastomeric material.

## Patentansprüche

1. Verfahren zur Regelung von Fehlerbildung in einer Dichtungsschicht eines Reifens während eines Prozesses zur Herstellung von selbstdichtenden Reifen für Fahrzeugräder, umfassend:
- Unterziehen eines Reifenrohlings (1), der zumindest eine Karkassenlage (3), eine Gürtelstruktur (6), die in einer radial äußeren Position auf die Karkassenlage (3) aufgebracht ist, ein Laufflächenband (7), das in einer radial äußeren Position auf die Gürtelstruktur (6) aufgebracht ist, und zumindest eine Schicht aus Dichtungsmaterial (10) umfasst, das in einer radial inneren Position auf die zumindest eine Karkassenlage (3) aufgebracht ist, eines Härtens und Formens, durch Erhitzen desselben über einen vorgegebenen Zeitraum (t₁) in einem Formhohlraum (11) einer Vulkanisierungsform (12), um zumindest das Laufflächenband (7), die Gürtelstruktur (6) und die Karkassenlage (3) im Wesentlichen zu härten;
- Herausnehmen des im Wesentlichen gehärteten Reifens (1) aus der Vulkanisierungsform (12);
- derartiges Anordnen des Reifens, dass eine radial äußere Fläche (17) davon, die zumindest dem Laufflächenband (7) entspricht, in Fluidverbindung mit der Außenumgebung ist;
- Ausüben eines Arbeitsdrucks (P₂) auf eine radial innere Fläche des Reifens (1), wobei der Druck in einem derartigen Ausmaß größer als der Druck der Außenumgebung (Pₑ) ist, dass er der Diffusion von Gasen entgegenwirkt, die während des Härtens erzeugt werden, innerhalb der Dichtungsschicht (10), bis die Entleerung der Gase durch zumindest die radial äußere Fläche (17) des Reifens (1) erzielt ist.

2. Verfahren nach Anspruch 1, wobei der Reifen (1) eine gasdichte Schicht oder Auskleidung (9) umfasst, die an einer radial inneren Position auf die zumindest eine Schicht aus Dichtungsmaterial (10) aufgebracht wird.

3. Verfahren nach Anspruch 1, wobei die Differenz zwischen dem Arbeitsdruck (P₂) und dem Druck der Außenumgebung (Pₑ) von 0,3 Bar bis 4 Bar beträgt.

4. Verfahren nach Anspruch 1, wobei die Differenz zwischen dem Arbeitsdruck (P₂) und dem Druck der Außenumgebung (Pₑ) von 1 Bar bis 3 Bar beträgt.

5. Verfahren nach Anspruch 1, wobei die Ausübung des Arbeitsdrucks (P₂) über eine Arbeitszeit (t₂) von 5 min bis 60 min durchgeführt wird.

6. Verfahren nach Anspruch 1, wobei die Ausübung des Arbeitsdrucks (P₂) über eine Arbeitszeit (t₂) von 10 min bis 40 min durchgeführt wird.

7. Verfahren nach Anspruch 1, wobei der Reifen (1) während des Ausübens des Arbeitsdrucks (P₂) erhitzt wird.

8. Verfahren nach Anspruch 1, wobei der Reifen (1) während des Ausübens des Arbeitsdrucks (P₂) auf einer Arbeitstemperatur (T₂) gehalten wird, die von 70 °C bis 120 °C beträgt.

9. Verfahren nach Anspruch 1, wobei der Reifen (1) während des Ausübens des Arbeitsdrucks (P₂) auf einer Arbeitstemperatur (T₂) gehalten wird, die von 80 °C bis 100 °C beträgt.

10. Verfahren nach Anspruch 1, wobei das Ausüben des Arbeitsdrucks (P₂) in einer zusätzlichen Füllvorrichtung (19) ausgeführt wird.

11. Verfahren nach Anspruch 10, wobei der Reifen (1) während einer Überführungszeit (t₁) von unter 3 min von der Vulaknisierungsform (12) zur zusätzlichen Füllvorrichtung (19) überführt wird.

12. Verfahren nach Anspruch 10, wobei der Reifen (1) während einer Überführungszeit (t₁) von 1 min von der Vulaknisierungsform (12) zur zusätzlichen Füllvorrichtung (19) überführt wird.

13. Verfahren nach Anspruch 10, wobei die zusätzliche Füllvorrichtung (19) während der Ausübung des Arbeitsdrucks (P₂) in einem Ofen angeordnet wird.

14. Prozess zum Herstellen von selbstdichtenden Reifen für Fahrzeugräder, umfassend:
- Bauen eines Reifenrohlings (1), der zumindest eine Karkassenlage (3), eine Gürtelstruktur (6), die in einer radial äußeren Position auf die Karkassenlage (3) aufgebracht ist, ein Laufflächenband (7), das in einer radial äußeren Position auf die Gürtelstruktur (6) aufgebracht ist, zumindest eine Schicht aus Dichtungsmaterial (10) umfasst, das in einer radial inneren Position auf die zumindest eine Karkassenlage (3) aufgebracht ist;
- Unterziehen des Reifenrohlings (1) eines Schritts des Härtens und Formens, durch Erhitzen desselben über einen vorgegebenen Zeitraum (t₁) in einem Formhohlraum (11) einer Vulkanisierungsform (12), um zumindest das Laufflächenband (7), die Gürtelstruktur (6) und die Karkassenlage (3) im Wesentlichen zu härten;
- Herausnehmen des im Wesentlichen gehärteten Reifens (1) aus der Vulkanisierungsform (12);
- derartiges Anordnen des Reifens (1), dass eine radial äußere Fläche (17) davon, die zumindest dem Laufflächenband (7) entspricht, in Fluidverbindung mit der Außenumgebung ist;
- Ausüben eines Arbeitsdrucks (P₂) auf eine radial innere Fläche des Reifens (1), wobei der Druck in einem derartigen Ausmaß größer als der Druck der Außenumgebung (Pₑ) ist, dass er der Diffusion von Gasen entgegenwirkt, die während des Härtens erzeugt werden, innerhalb der Dichtungsschicht (10), bis die Entleerung der Gase durch zumindest die radial äußere Fläche (17) des Reifens (1) erzielt ist.

15. Prozess nach Anspruch 14, wobei das Bauen Folgendes umfasst: Aufbringen von zumindest einer luftdichten Schicht oder Auskleidung (9) an einer radial inneren Position auf das Dichtungsmaterial (10).

16. Prozess nach Anspruch 14, wobei die Schicht aus Dichtungsmaterial (10) die radial innerste Schicht des Reifens (1) ist.

17. Prozess nach Anspruch 14, wobei der Reifenrohling (1) während des Schritts des Härtens und Formens auf einer vorgegebenen Temperatur (t₁) erhitzt wird, die von 120 °C bis 200 °C beträgt.

18. Prozess nach Anspruch 14, wobei die vorgegebene Zeit (t₁) von 15 min bis 30 min beträgt.

19. Prozess nach Anspruch 14, wobei die radial innere Fläche (16) des Reifens (1) während des Formens einem vorgegebenen Druck (P₁) unterworfen wird, der von 10 Bar bis 30 Bar beträgt.

20. Prozess nach Anspruch 14, wobei die zumindest eine Karkassenlage (3) mehrere Textilverstärkungskorde umfasst, die parallel zueinander angeordnet sind und zumindest teilweise mit einer Schicht aus Elastomermaterial bedeckt sind; wobei die Textilverstärkungskorde eine freie Prozentwärmeschrumpfung aufweisen, die bei Messung in Heißluft auf 177 °C 4% nicht übersteigt, vorzugsweise 3% nicht übersteigt, insbesondere bevorzugt 2,5% nicht übersteigt.

21. Prozess nach Anspruch 14, wobei die zumindest eine Karkssenlage (3) mehrere Metallverstärkungskorde umfasst, die parallel zueinander angeordnet sind und zumindest teilweise mit einer Schicht aus Elastomermaterial bedeckt sind.

## Revendications

1. Procédé de commande de formation de fêlure dans une couche d'obturation d'un pneu pendant un processus de fabrication de pneus auto-obturants pour roues de véhicule, comprenant le fait :
- de soumettre un pneu cru (1), comprenant au moins une nappe de carcasse (3), une structure de ceinture (6) appliquée à une position radialement externe à ladite nappe de carcasse (3), une bande de roulement (7) appliquée à une position radialement externe à ladite structure de ceinture (6) et au moins une couche de matériau d'obturation (10) appliquée à une position radialement interne à ladite au moins une nappe de carcasse (3), à un durcissement et à un moulage, chauffant celui-ci sur une période prédéterminée (t₁) dans une cavité de moulage (11) d'un moule de vulcanisation (12) pour durcir essentiellement au moins ladite bande de roulement (7), ladite structure de ceinture (6) et ladite nappe de carcasse (3) ;
- de retirer le pneu essentiellement durci (1) dudit moule de vulcanisation (12) ;
- d'agencer ledit pneu de sorte qu'une surface radialement externe (17) de celui-ci, correspondant au moins à la bande de roulement (7), soit en communication fluidique avec l'environnement externe ;
- d'appliquer une pression d'utilisation (P₂) sur une surface radialement interne du pneu (1), laquelle pression est supérieure à la pression de l'environnement externe (Pₑ) dans une mesure telle qu'elle empêche la diffusion des gaz générés pendant le durcissement, à l'intérieur de la couche d'obturation (10), jusqu'à ce que l'évacuation desdits gaz soit obtenue à travers au moins ladite surface radialement externe (17) du pneu (1).

2. Procédé tel que revendiqué dans la revendication 1, dans lequel le pneu (1) comprend une couche ou un revêtement étanche aux gaz (9) appliqué(e) à une position radialement interne à ladite au moins une couche de matériau d'obturation (10).

3. Procédé tel que revendiqué dans la revendication 1, dans lequel la différence entre la pression d'utilisation (P₂) et la pression de l'environnement externe (Pₑ) est comprise entre 0,3 bar et 4 bars.

4. Procédé tel que revendiqué dans la revendication 1, dans lequel la différence entre la pression d'utilisation (P₂) et la pression de l'environnement externe (Pₑ) est comprise entre 1 bar et 3 bars.

5. Procédé tel que revendiqué dans la revendication 1, dans lequel l'application de ladite pression d'utilisation (P₂) est effectuée pendant un temps d'utilisation (t₂) compris entre 5 min et 60 min.

6. Procédé tel que revendiqué dans la revendication 1, dans lequel l'application de ladite pression d'utilisation (P₂) est effectuée pendant un temps d'utilisation (t₂) compris entre 10 min et 40 min.

7. Procédé tel que revendiqué dans la revendication 1, dans lequel, pendant l'application de ladite pression d'utilisation (P₂), le pneu (1) est chauffé.

8. Procédé tel que revendiqué dans la revendication 1, dans lequel, pendant l'application de ladite pression d'utilisation (P₂), le pneu (1) est maintenu à une température d'utilisation (T₂) comprise entre 70°C et 120°C.

9. Procédé tel que revendiqué dans la revendication 1, dans lequel, pendant l'application de ladite pression d'utilisation (P₂), le pneu (1) est maintenu à une température d'utilisation (T₂) comprise entre 80°C et 100°C.

10. Procédé tel que revendiqué dans la revendication 1, dans lequel l'application de ladite pression d'utilisation (P₂) est effectuée dans un dispositif de gonflage auxiliaire (19).

11. Procédé tel que revendiqué dans la revendication 10, dans lequel le pneu (1) est transféré du moule de vulcanisation (12) au dispositif de gonflage auxiliaire (19) pendant un temps de transfert (tₜ) inférieur à 3 min.

12. Procédé tel que revendiqué dans la revendication 10, dans lequel le pneu (1) est transféré du moule de vulcanisation (12) au dispositif de gonflage auxiliaire (19) pendant un temps de transfert (tₜ) de 1 min.

13. Procédé tel que revendiqué dans la revendication 10, dans lequel, pendant l'application de ladite pression d'utilisation (P₂), le dispositif de gonflage auxiliaire (19) est placé dans un four.

14. Processus de fabrication de pneus auto-obturants pour roues de véhicule, comprenant le fait :
- de construire un pneu cru (1) comprenant au moins une nappe de carcasse (3), une structure de ceinture (6) appliquée à une position radialement externe à ladite nappe de carcasse (3), au moins une bande de roulement (7) appliquée à une position radialement externe à ladite structure de ceinture (6), au moins une couche de matériau d'obturation (10) appliquée à une position radialement interne à ladite au moins une nappe de carcasse (3) ;
- de soumettre le pneu cru (1) à une étape de durcissement et de moulage, chauffant celui-ci pendant une période prédéterminée (t₁), dans une cavité de moulage (11) d'un moule de vulcanisation (12) pour durcir essentiellement au moins ladite bande de roulement (7), ladite structure de ceinture (6) et ladite nappe de carcasse (3) ;
- de retirer le pneu essentiellement durci (1) dudit moule de vulcanisation (12) ;
- de disposer ledit pneu (1) de sorte qu'une surface radialement externe (17) de celui-ci correspondant au moins à la bande de roulement (7) soit en communication fluidique avec l'environnement externe ;
- d'appliquer une pression d'utilisation (P₂) sur une surface radialement interne (16) du pneu (1), laquelle pression est supérieure à la pression de l'environnement externe (Pₑ) dans une mesure telle qu'elle empêche la diffusion des gaz générés pendant le durcissement, à l'intérieur de la couche d'obturation (10), jusqu'à ce qu'une évacuation essentiellement complète desdits gaz soit obtenue à travers au moins ladite surface radialement externe (17) du pneu (1).

15. Processus tel que revendiqué dans la revendication 14, dans lequel la construction comprend le fait :
d'appliquer au moins une couche ou un revêtement étanche à l'air (9) à une position radialement interne au matériau d'obturation (10).

16. Processus tel que revendiqué dans la revendication 14, dans lequel la couche de matériau d'obturation (10) est la couche radialement la plus interne du pneu (1).

17. Processus tel que revendiqué dans la revendication 14, dans lequel, pendant l'étape de durcissement et de moulage, le pneu cru (1) est chauffé à une température prédéterminée (T₁) comprise entre 120°C et 200°C.

18. Processus tel que revendiqué dans la revendication 14, dans lequel le temps prédéterminé (t₁) est compris entre 15 min et 30 min.

19. Processus tel que revendiqué dans la revendication 14, dans lequel, pendant le moulage, la surface radialement interne (16) du pneu (1) est soumise à une pression prédéterminée (P₁) comprise entre 10 bars et 30 bars.

20. Processus tel que revendiqué dans la revendication 14, dans lequel ladite au moins une nappe de carcasse (3) comprend une pluralité de câblés textiles de renforcement disposés parallèlement les uns aux autres et au moins partiellement recouverts d'une couche de matériau élastomère ; où lesdits câblés textiles de renforcement ont un rétrécissement thermique libre en pourcentage mesuré à l'air chaud à 177°C, ne dépassant pas 4%, de préférence ne dépassant pas 3%, plus préférablement ne dépassant pas 2,5%.

21. Processus tel que revendiqué dans la revendication 14, dans lequel ladite au moins une nappe de carcasse (3) comprend une pluralité de câblés métalliques de renforcement disposés parallèlement les uns aux autres et au moins partiellement recouverts d'une couche de matériau élastomère.
